# EUROPEAN PATENT APPLICATION

(11) **EP 2 278 449 A2**
(43) Date of publication of application: **26.01.2011**
(21) Application number: 10168587.3
(22) Date of filing: 06.07.2010
(51) Int. Cl.: G06F 3/12

(54) **Apparatus, method, system and storage medium for setting print status**

(30) Priority: 08.07.2009 US 223828 P
(71) Applicant: Kabushiki Kaisha Toshiba, Tokyo 105-8001 (JP); Toshiba TEC Kabushiki Kaisha, Tokyo 141-8664 (JP)
(72) Inventor: Hibino, Makoto, Shinagawa-ku Tokyo 141-8664 (JP)
(74) Representative: Gendron, Vincent Christian

(57) **Abstract**

According to one embodiment, a print status setting apparatus (10) includes a unit (31) configured to display a print setting screen for acquiring a print status of a document, a unit (32) configured to acquire a print status set value via the print setting screen, a unit (33) configured to generate, from the print status set value, first print information represented by a language used by a printing apparatus for print processing, a unit (34) configured to display, on the basis of the first print information, a preview screen to change a print status for each of pages, a unit (35) configured to acquire a print status change set value to change the print status for each of the pages, a unit (36) configured to generate second print information obtained by changing the first print information with the print status change set value applied thereto, and a unit (37) configured to output the second print information.

## Description

### FIELD

Embodiments described herein relate generally to a setting apparatus configured to set a print status in a printing apparatus such as a MFP (Multi-Function Peripheral), a setting method for the setting apparatus, a storage medium having a setting program for the setting apparatus recorded therein, and a print status setting system in which the printing apparatus such as the MFP and a processing apparatus such as a PC (Personal Computer) are connected via a network.

### BACKGROUND

As a form of a printing apparatus, there is an apparatus called MFP (Multi-Function Peripheral). The MFP is a digital complex machine configured to realize, in addition to a printing function, plural functions such as a copying function, a scanner function, a facsimile function, and an image data storing function.

When causing the MFP to print an original document created by a personal computer, a user performs print setting from a print setting screen of a printer driver in the personal computer. In the print setting, the user can set deletion, insertion, 2-in-1 printing, and the like of pages of the created original document. Further, the user can set whether printing is color printing or monochrome printing for the original document as a whole. However, there is a need not only for such setting functions in the past but also for a function for setting a print status in page units.

### BRIEF DESCRIPTION OF THE DRAWINGS

FIG. 1 is an exemplary view showing a diagram of a configuration example of a print status setting system according to an embodiment;
FIG. 2 is an exemplary view showing a diagram of a print screen according to an embodiment;
FIG. 3 is an exemplary view showing a diagram of a print setting screen according to an embodiment;
FIG. 4 is an exemplary view showing a diagram of a preview screen according to an embodiment;
FIG. 5 is an exemplary view showing a diagram of another form of the preview screen according to an embodiment;
FIG. 6 is an exemplary view showing a diagram of still another form of the preview screen according to an embodiment;
FIG. 7 is an exemplary view showing a diagram of the configuration of a print status setting apparatus and a flow of processing thereof according to an embodiment;
FIG. 8 is an exemplary view showing a flowchart for explaining a schematic processing procedure of print status setting processing according to an embodiment;
FIG. 9 is an exemplary view showing a diagram of normal print processing performed by using an XPS printer driver according to an embodiment;
FIG. 10 is an exemplary view showing a diagram for explaining a method of changing setting data created by a filter according to an embodiment;
FIG. 11 is an exemplary view showing a diagram of a specific example in which color setting is changed according to an embodiment;
FIGS. 12A and 12B are exemplary views showing diagrams of an example in which color setting is described in a PJL according to an embodiment;
FIG. 13 is an exemplary view showing a diagram of an example of description in PostScript according to an embodiment;
FIGS. 14A and 14B are exemplary views showing diagrams of an example of description in a PCL according to an embodiment;
FIGS. 15A and 15B are exemplary views showing diagrams of an example of description in an XPS according to an embodiment; and
FIG. 16 is an exemplary view showing a diagram of the configuration of a printing apparatus and a flow of processing thereof according to an embodiment.

### DETAILED DESCRIPTION

In general, according to one embodiment, a print status setting apparatus includes: a unit configured to display a print setting screen for acquiring a print status of a document, a unit configured to acquire a print status set value via the print setting screen, a unit configured to generate, from the print status set value, first print information represented by a language used by a printing apparatus for print processing, a unit configured to display, on the basis of the first print information, a preview screen to change a print status for each of pages, a unit configured to acquire a print status change set value to change the print status for each of the pages, a unit configured to generate second print information obtained by changing the first print information with the print status change set value applied thereto, and a unit configured to output the second print information.

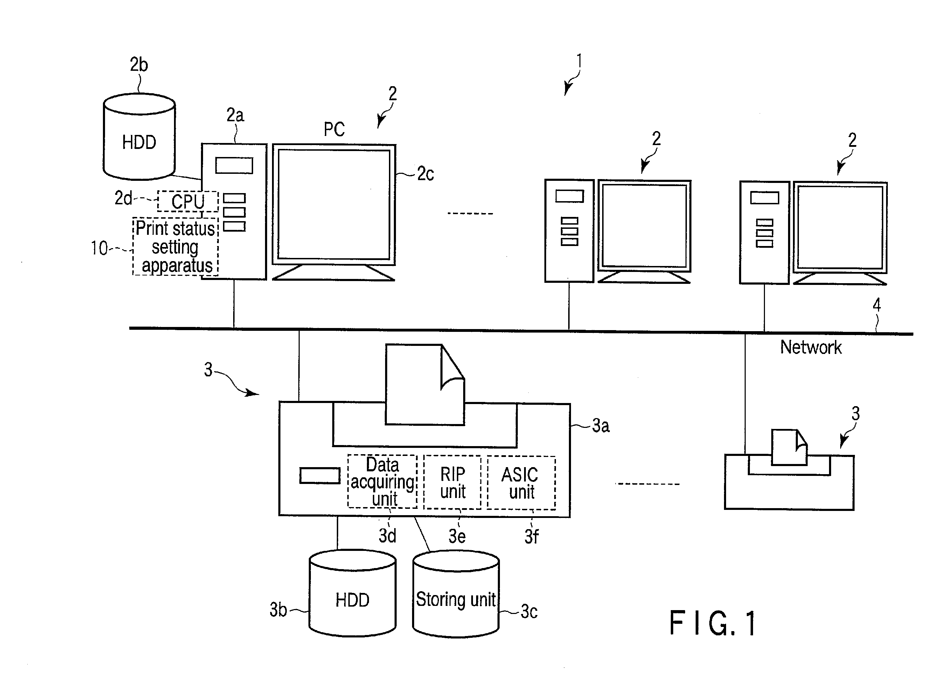

FIG. 1 is an exemplary view showing a diagram of a configuration example of a print status setting system according to an embodiment. The print status setting system 1 includes at least one PC (personal computer) 2 and at least one printing apparatus 3. The PC 2 and the printing apparatus 3 are connected via a network 4.

The PC 2 is a data processing apparatus configured to generate print data and transmit the print data to the printing apparatus 3. The PC 2 includes a processing unit 2a, a HDD (Hard Disk Drive) 2b, and an input and output device 2c. The processing unit 2a includes a CPU (Central Processing Unit) 2d and a print status setting apparatus 10. The processing unit 2a executes processing for generating print data. The HDD 2b stores the pint data, various reference data, and the like. The input and output device 2c includes a display. The input and output device 2c receives an instruction input from a user and displays a screen concerning print data generation.

The printing apparatus 3 is a digital complex machine called MFP. The printing apparatus 3 alone can play roles of plural apparatuses such as a copying machine, a scanner, a facsimile apparatus, and an image data recording apparatus (a BOX apparatus).

The printing apparatus 3 includes a processing unit 3a, a HDD 3b, and a storing unit 3c. The processing unit 3a includes a data acquiring unit 3d, a RIP (Raster Image Processing) unit 3e, and an ASIC (Application Specific IC) unit 3f. The processing unit 3a acquires print data transmitted thereto and forms an image. The HDD 3b stores the print data, image formation data, and the like. The storing unit 3c stores various kinds of information, computer programs, and the like used in the printing apparatus 3.

A print status setting method according to this embodiment is explained below. When the user creates document data using a document creation application in the PC 2 and starts print setting operation, a print screen of the application is displayed on the input and output device 2c.

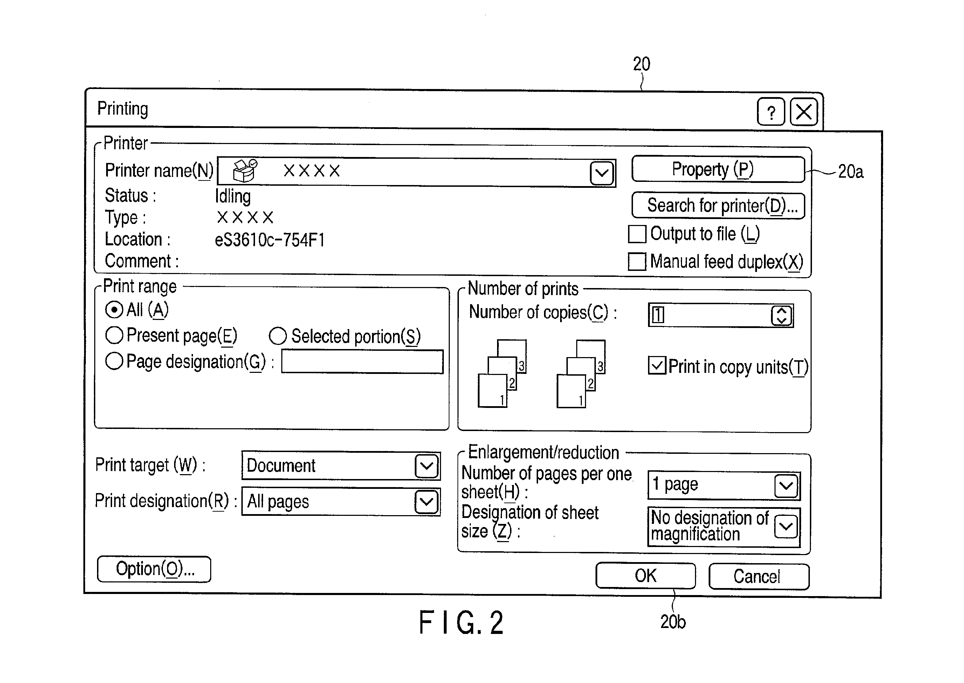

FIG. 2 is an exemplary view showing a diagram of a print screen according to an embodiment. The user sets a page range to be printed, the number of prints, and the like using the print screen 20. When the user depresses a property button 20a, a print setting screen 21 is displayed.

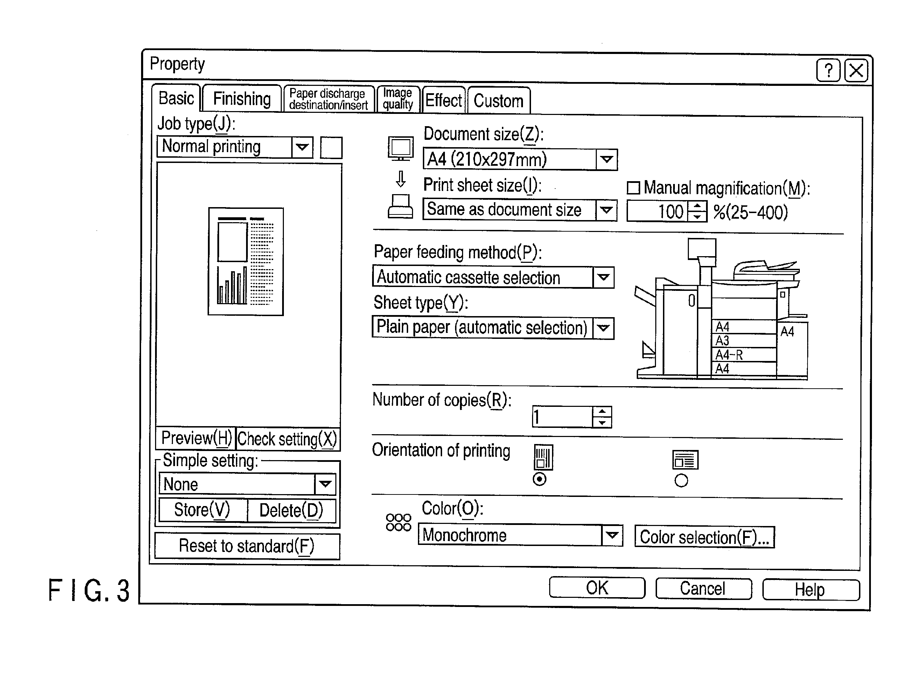

FIG. 3 is an exemplary view showing a diagram of a print setting screen according to an embodiment. On the print setting screen 21, the user can set a more detailed print status to correspond to the functions of the printing apparatus 3. However, the print setting screen 21 is a screen for performing setting concerning an entire document to be printed. A print status cannot be set for each of pages on the print setting screen 21. For example, "monochrome" is set in a color status setting space 21a. Printing is performed for the entire document in monochrome according to this setting. The same holds true for other setting contents.

When the user depresses an OK button 21b of the print setting screen 21, the print screen 20 shown in FIG. 2 is displayed. When the user ends the print setting and depresses the OK button 20b of the print screen 20, a preview screen 24 is displayed.

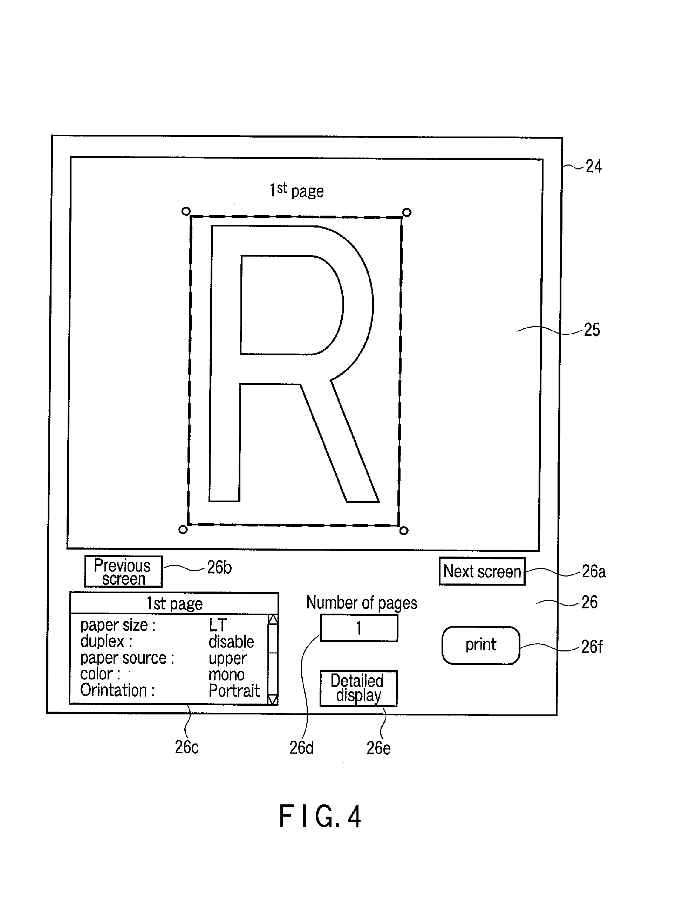

FIG. 4 is an exemplary view showing a diagram of a preview screen according to an embodiment. In the preview screen 24, a status display area 25 and a setting area 26 are provided.

In the status display area 25, a status of printing is displayed in page units. In the setting area 26, plural setting buttons for setting a form to be displayed in the status display area 25 are provided. In the setting area 26, the print status of the page displayed in the status display area 25 is displayed as characters.

In the setting area 26, a next screen button 26a, a previous screen button 26b, a print status display space 26c, a number-of-pages setting space 26d, a detail display button 26e, and a print button 26f are provided.

In the status display area 25 shown in FIG. 4, an image "R" representing a print status of a first page is displayed. The image is not an image to be actually printed but an image represented by a predetermined figure for representing a print status. For example, since "R" is displayed in monochrome, it is seen that the first page is printed in monochrome. Since a frame surrounding "R" is vertically long, it is seen that the first page is printed in portrait.

When the user depresses the next screen button 26a provided in the setting area 26 shown in FIG. 4, an image "R" representing a print status of a second page is displayed. When the user depresses the previous screen button 26b, an image "R" representing a print status of a last page is displayed.

In the print status display space 26c, the print status of the first page set by the user is displayed as characters. For example, a paper size is set as LT (Letter), duplex is set as disable, a paper source is set as upper, a color is set as mono, and an orientation is set as portrait.

A scroll bar is provided in the print status display space 26c. The user can check other setting statuses by operating the scroll bar. Contents displayed in the print status display space 26c are contents of the setting items provided in the setting screens shown in FIGS. 2 and 3. In the display in the print status display space 26c, items for which print statuses can be set for each of the pages and items that can be set for the entire document are displayed to be separated or identified.

The user can designate an image in the status display area 25 and perform operation for changing a print status for each of the pages. For example, when the user moves a cursor onto one image displayed in the status display area 25 and performs right click of a mouse, a menu screen is displayed. The menu screen is a screen for changing the items displayed in the print status display space 26c. When the user performs change operation in the menu screen, a print status of a page corresponding to the image is changed.

The user can operate the number-of-pages setting space 26d and input the number of pages to be displayed in the status display area 25, i.e., the number of images to be displayed. For example, when the user operates the number-of-pages setting space 26d and inputs the number of pages = 8, eight images of first to eighth pages are displayed in the status display area 25.

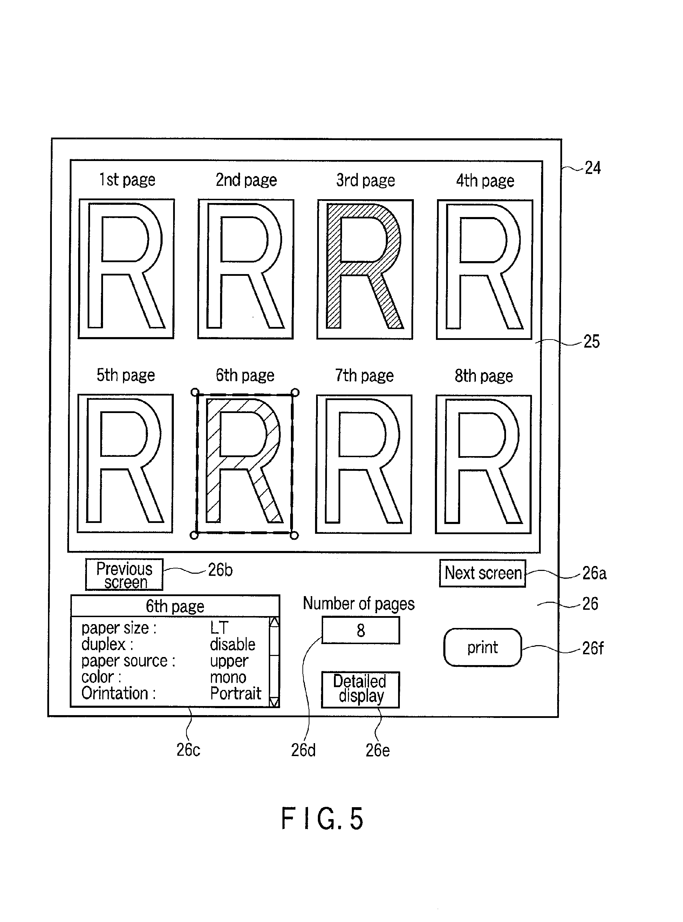

FIG. 5 is an exemplary view showing a diagram of another form of the preview screen according to an embodiment. The eight images of the first to eighth pages are displayed in the status display area 25 of the preview screen 24. The user can change print statuses of the respective pages displayed in the status display area 25. For example, when the user moves the cursor onto the image of the sixth page displayed in the status display area 25 and performs right click of the mouse, an input screen for changing the print status of the sixth page is displayed. When the user performs changing operation on the input screen, items of the sixth page displayed in the print status display space 26c are changed and the print status of the sixth page is changed. In FIG. 5, the color is changed from mono to color. A pattern image of the sixth page is displayed in color according to the change. The third page is already changed to color.

When the user depresses the detail display button 26e on the preview screen 24 shown in FIG. 4, a detailed image of the page selected in the status display area 25 is displayed.

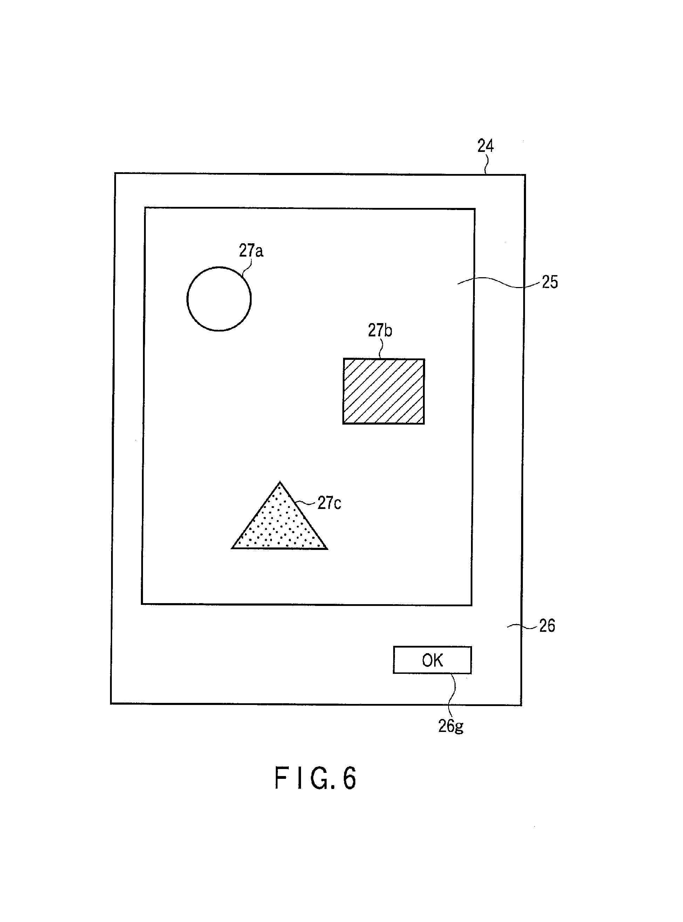

FIG. 6 is an exemplary view showing a diagram of still another form of the preview screen according to an embodiment. In the status display area 25 shown in FIG. 6, plural objects 27a, 27b, and 27c are displayed as a detailed image of a page. Objects are a character, a figure, a photograph, and the like included in the page. When the user moves the cursor onto an object displayed in the status display area 25 and performs right click of the mouse, a menu screen for changing a color of the object is displayed. When the user performs changing operation on the menu screen, the object is displayed with a print status, for example, a color thereof changed.

Therefore, for example, the user can also display only a photograph image in color and display other images in monochrome. When the user checks a color change result and depresses an OK button 26g, the preview screen 24 shown in FIG. 4 is displayed.

By repeating the operation on the preview screen 24, the user can set a print status for each of the pages and each of the objects. When the user depresses the print button 26f, print data reflecting the changed contents is transmitted to the printing apparatus 3. The printing apparatus 3 executes printing with the transmitted contents.

The configuration of the print status setting apparatus 10 for realizing the print status setting method explained above and a main processing procedure of the print status setting apparatus 10 are explained below.

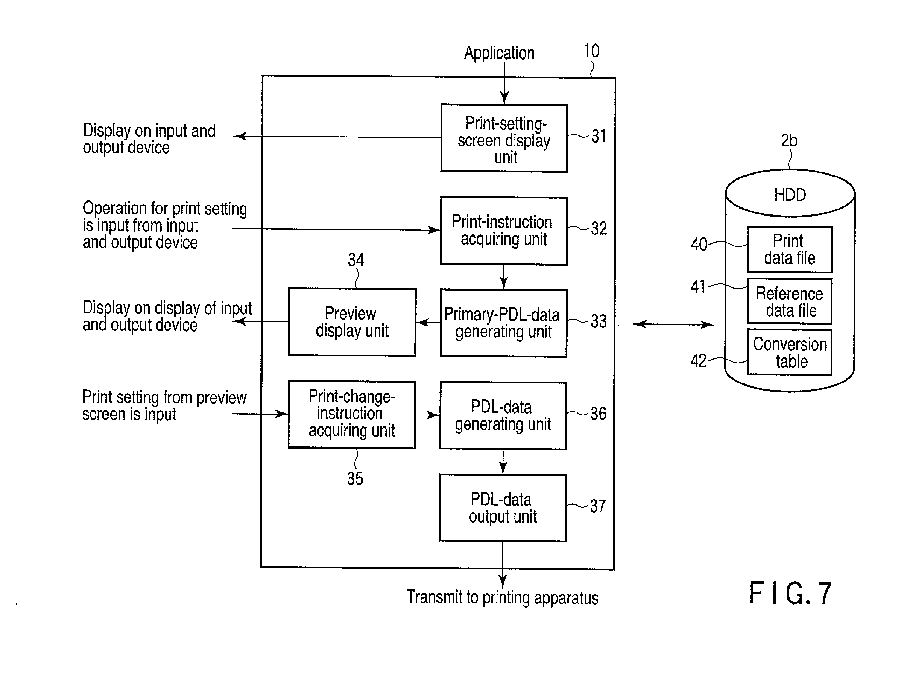

FIG. 7 is an exemplary view showing a diagram of the configuration of a print status setting apparatus and a flow of processing thereof according to an embodiment. The print status setting apparatus 10 includes a print-setting-screen display unit 31, a print-instruction acquiring unit 32, a primary-PDL-data generating unit 33, a preview display unit 34, a print-change-instruction acquiring unit 35, a PDL-data generating unit 36, and a PDL-data output unit 37. The HDD 2b stores a print data file 40, a reference data file 41, and a conversion table 42.

The print-setting-screen display unit 31 is started from the document creation application and displays the print screen 20 and the print setting screen 21 on the display of the input and output device 2c. The print-instruction acquiring unit 32 acquires print setting content input by the user. The print setting content is set for an entire document as explained above. The primary-PDL-data generating unit 33 generates primary PDL (Page Description Language) data according to the print setting content.

The preview display unit 34 displays the preview screen 24 shown in FIGS. 4 to 6. The print-change-instruction acquiring unit 35 acquires print setting data in page units input from the preview screen 24, feeds back the data to the preview display unit 34, and causes the preview display unit 34 to update the preview screen 24. When a color is changed on an update screen, the preview display unit 34 converts, referring to the conversion table 42 provided in the HDD 2b, a color to be displayed.

When the print button 26f is depressed, the print-change-instruction acquiring unit 35 starts the PDL-data generating unit 36. The PDL-data generating unit 36 generates PDL data on the basis of the primary PDL data and the print setting data changed by the user. The PDL-data output unit 37 outputs the generated PDL data to the printing apparatus 3.

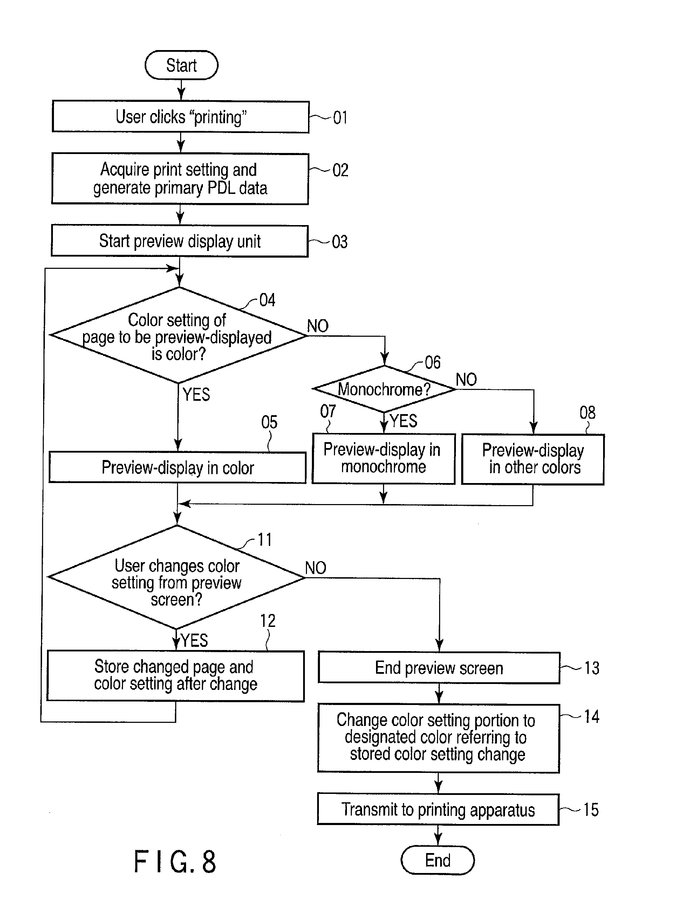

A schematic procedure of print status setting processing is explained below with reference to FIGS. 8 to 15. The processing explained below is processing concerning a function for changing the color among print status setting processing functions. Therefore, even functions not described in the following explanation are included in the print status setting processing functions as long as the functions are described in the explanation of FIGS. 1 to 7.

FIG. 8 is an exemplary view showing a flowchart for explaining a schematic processing procedure of print status setting processing according to an embodiment.

In Act 01, the user performs print setting and depresses an OK button 20b of the print screen 20. In Act 02, the print-instruction acquiring unit 32 acquires print setting information and the primary-PDL-data generating unit 33 generates primary PDL data on the basis of the print setting information. In Act 03, the primary-PDL-data generating unit 33 starts the preview display unit 34.

In Act 04, in displaying a preview of a page, the preview display unit 34 checks whether color setting for the page is "color". The color setting is any one of "color (full-color)", "two colors", and "monochrome (black and white)".

In the case of Yes in Act 04, i.e., if the color setting is "color (full-color)", in Act 05, the preview display unit 34 displays an image in a form indicating that the page is set as "color". In the case of No in Act 04, i.e., if the color setting is not "color (full-color)", in Act 06, the preview-display unit 34 checks whether the color setting of the page to be preview-displayed is "monochrome (black and white)".

In the case of Yes in Act 06, i.e., if the color setting is "monochrome (black and white)", in Act 07, the preview display unit 34 displays the image in a form indicating that the page is set as "monochrome (black and white)". In the case of No in Act 06, i.e., if the color setting is "two colors", in Act 08, the preview display unit 34 displays the image in a form indicating that the page is set as "two colors".

A method of processing performed when an image displayed on the preview screen 24 is not the pattern image explained above but is a thumbnail image obtained by reducing an image of a page is explained. In Act 05, the preview display unit 34 reduces the image generated by using the created primary PDL data. Therefore, in this case, the preview display unit 34 does not need to perform color conversion processing.

On the other hand, in Act 07, the preview display unit 34 performs color conversion processing for converting RGB values of the created primary PDL data into a Gray value to generate a monochrome image and reduces the monochrome image. In Act 08, the preview display unit 34 performs color conversion processing for converting the RGB values of the created primary PDL data into other colors to generate a two-color image and reduces the two-color image. Therefore, in the processing in Acts 07 and 08, the color conversion processing is necessary.

If color conversion processing performed by the printing apparatus 3 is adopted as the color conversion processing in the processing in Acts 07 and 08, a color printed by the printing apparatus 3 can be accurately reproduced and displayed. However, the color conversion processing executed by the printing apparatus 3 requires long processing time. Therefore, in order to efficiently execute the color conversion processing, it is also possible to convert RGB into Gray and convert RGB into other colors using the simple conversion table 42 and perform preview display in the converted color(s).

In Act 11 in FIG. 8, the print-change-instruction acquiring unit 35 checks whether the user changes the color setting from the preview screen 24. In the case of Yes in Act 11, i.e., if the color setting is changed, in Act 12, the print-change-instruction acquiring unit 35 stores print data of the page and the color setting after the change in the print data file 40. The print-change-instruction acquiring unit 35 returns to Act 04 and executes the preview display in the changed color setting.

In the case of No in Act 11, i.e., if the print setting ends and the print button 26f is depressed, in Act 13, the preview display unit 34 ends the display of the preview screen 24. In Act 14, the PDL-data generating unit 36 changes a color setting portion of the original print data to a designated color referring to the color setting change stored in the print data file 40. In Act 15, the PDL-data output unit 37 transmits the changed PDL data to the printing apparatus 3.

An example in which the print setting processing is realized for each of pages is specifically explained below.

### [Example in which an XPS (XML Paper Specification: XML stands for Extensible Markup Language) printer driver is used]

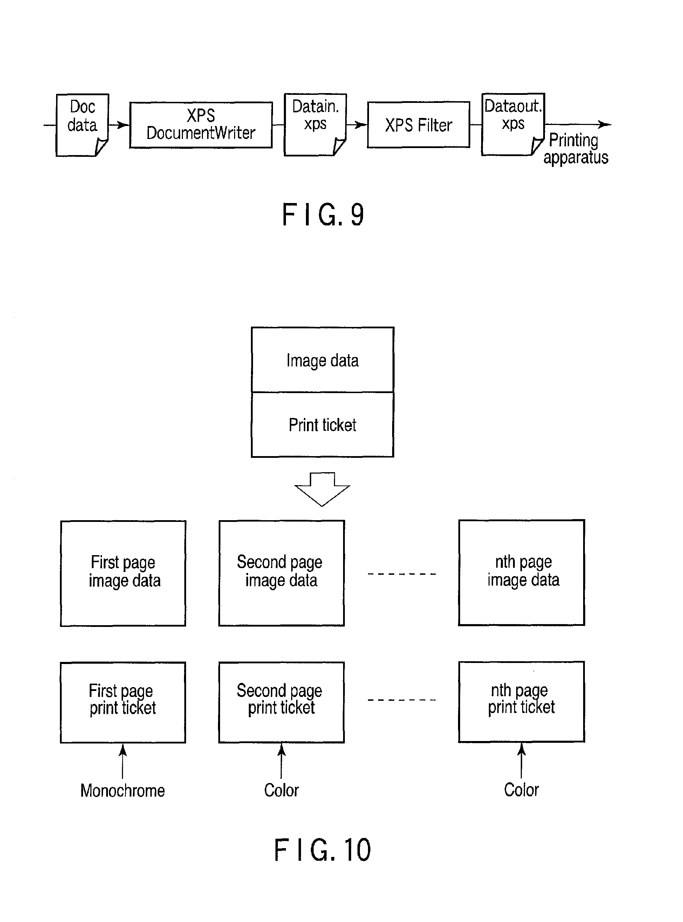

FIG. 9 is an exemplary view showing a diagram of normal print processing performed by using an XPS printer driver according to an embodiment. The XPS printer driver includes an XPS Document Writer and an XPS Filter. An XPS Filter section can be developed by each of vendors. Data created by the Document Writer is represented as datain.xps and data created by the Filter is represented as dataout.xps.

In the example explained above, datain.xps is equivalent to the data created by the print screen 20 shown in FIG. 2 and dataout.xps is equivalent to the data created by the print setting screen 21 shown in FIG. 3. Therefore, the print status setting apparatus 10 shown in FIG. 7 can be configured by combining the preview display unit 34, the print-change-instruction acquiring unit 35, and the PDL-data generating unit 36 with the XPS printer driver.

FIG. 10 is an exemplary view showing a diagram for explaining a method of changing setting data created by a filter according to an embodiment. The data created by the Filter includes an image data for each of pages and a print ticket that is data for setting for printing the image data. Color setting can be changed for each of the pages by changing color setting of the print ticket corresponding to the image data of each of the pages.

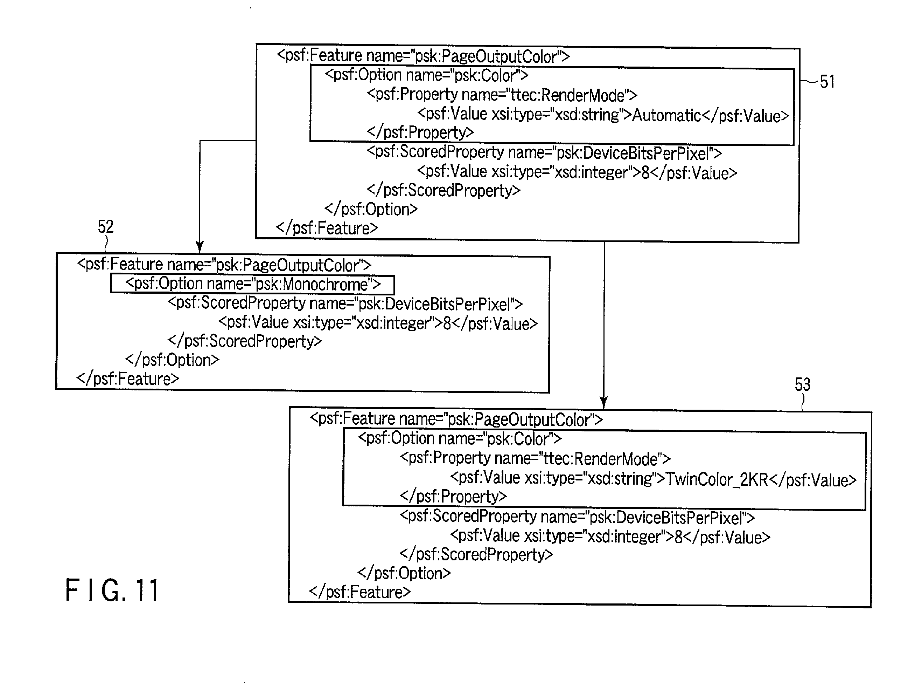

FIG. 11 is an exemplary view showing a diagram of a specific example in which color setting is changed according to an embodiment. In a print ticket 51, color setting is Automatic. Automatic means a mode in which, if an original document is color, an image is printed in color and, if an original document is monochrome, an image is printed in monochrome. If the color setting is changed to monochrome, as indicated by a print ticket 52, an instruction shown in a portion surrounded by a frame is changed. On the other hand, if the color setting is changed to two-color printing of red and black, as indicated by a print ticket 53, an instruction shown in a portion surrounded by a frame is changed.

### [Example in which a PS/PCL printer driver is used]

When the print processing is performed by using a PS/PCL printer driver, after performing print setting from a property of the printer driver, the user clicks the OK button 20b of the print screen 20. At this point, the PS/PCL printer driver starts an application that can preview-display data of PS/PCL and causes the preview screen 24 to display data created by the printer driver. On the preview screen 24, pages can be displayed by thumbnail display or one-page display.

The configuration of the print status setting apparatus 10 and a flow of processing thereof in this case are the same as the configuration and the flow of processing shown in FIG. 7.

The user can change color setting for each of pages. A result of the change is reflected on the preview screen 24. The user can also select arbitrary pages and collectively change the color setting. After performing the color setting for each of the pages, when the user depresses the print button 26f, the printer driver describes the color setting for each of the pages in a PJL (Print Job Language) and transmits the color setting to the printing apparatus 3.

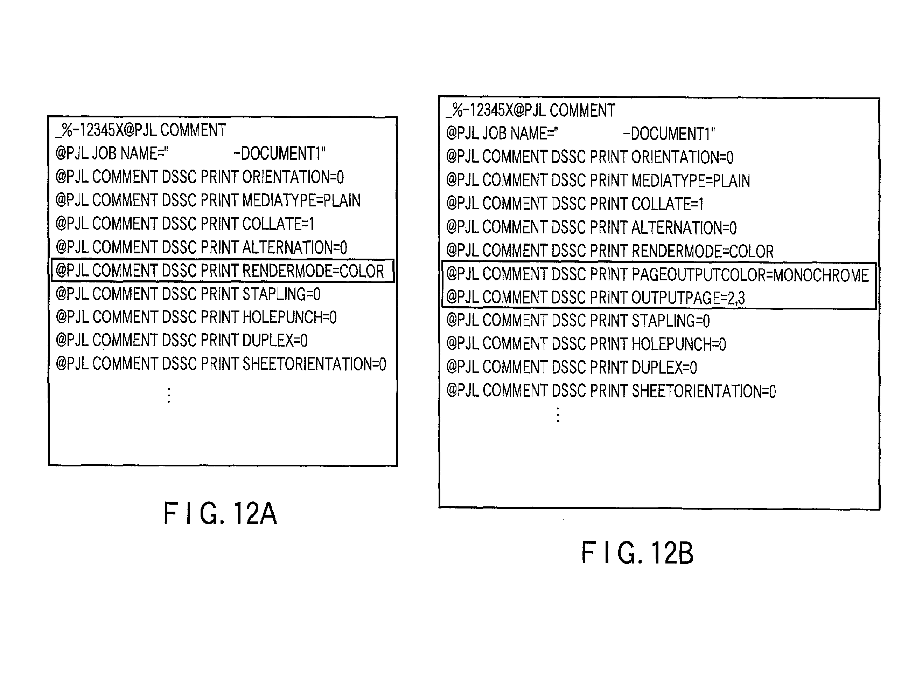

FIGS. 12A and 12B are exemplary views showing diagrams of an example in which color setting is described in a PJL according to an embodiment.

Usually, whether a job of print data performs color printing can be designated by a PJL at the head of the print data. A PJL surrounded by a frame shown in FIG. 12A designates that the color printing is performed. If the user desires to print a second page and a third page in monochrome, a PJL surrounded by a frame shown in FIG. 12B only has to be added.

When the PS/PCL printer driver is used, color setting of a PDL is not changed and color setting is designated in a PJL. The printing apparatus 3 receives data of the color setting, analyzes a PJL portion, and performs color conversion for each of pages.

An example in which print setting processing is realized for each of objects of PDLs as shown in FIG. 6 is specifically explained.

### [Example in which PostScript is changed]

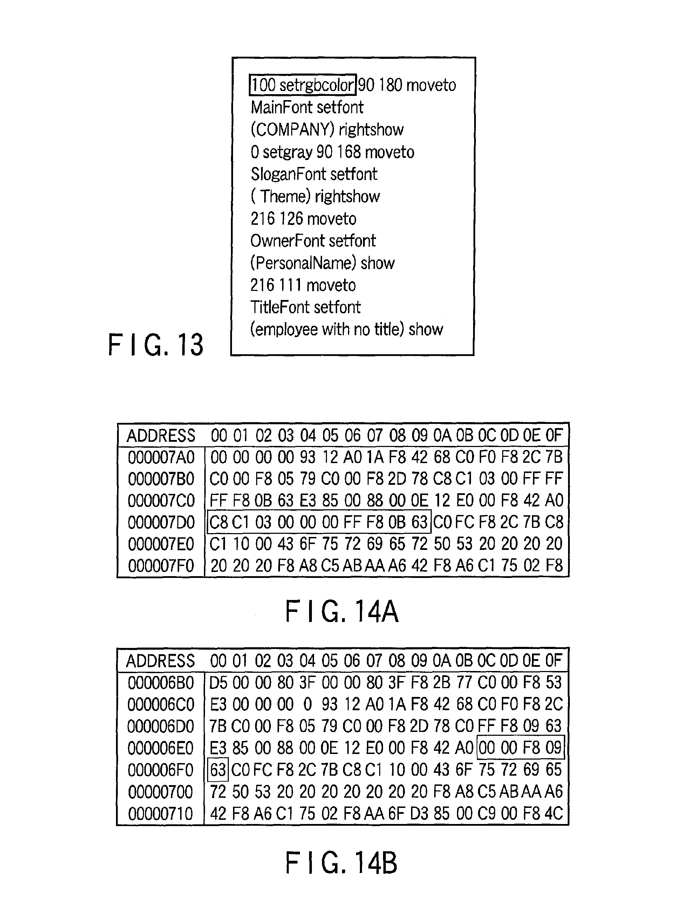

FIG. 13 is an exemplary view showing a diagram of an example of description in PostScript according to an embodiment. In FIG. 13, an instruction for printing "COMPANY" in red is shown. For example, when it is desired to change the description of "COMPANY" to monochrome, a portion surrounded by a frame only has to be changed to "Osetgray".

### [Example in which a PCL is changed]

FIGS. 14A and 14B are exemplary views showing diagrams of an example of description in a PCL according to an embodiment. In the PCL, print data is represented in binary. A portion surrounded by a frame in FIG. 14A is an instruction portion for designating black. Blue can be designated by changing the instruction portion to content surrounded by a frame in FIG. 14B.

### [Example in which an XPS is changed]

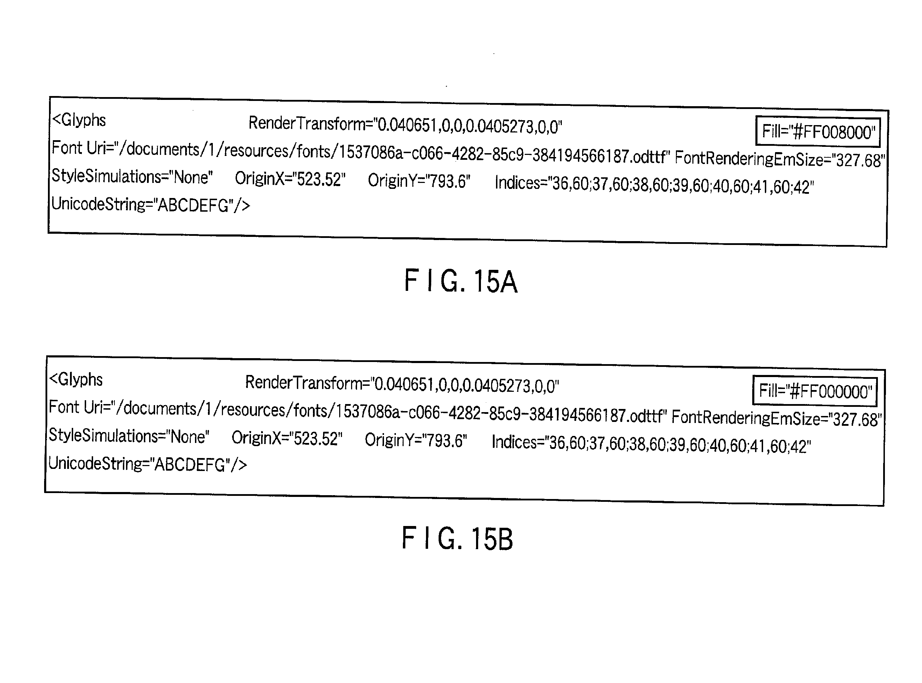

FIGS. 15A and 15B are exemplary views showing diagrams of an example of description in an XPS according to an embodiment. In FIG. 15A, an instruction for displaying "ABCDEFG" in green from a position of an X coordinate = 523.52 and a Y coordinate = 793.6 is described. "ABCDEFG" can be changed to be displayed in black by changing the instruction surrounded by a frame to an instruction surrounded by a frame in FIG. 15B.

As explained above, a color can be changed for each of objects by rewriting an instruction of a color space designated for each of the objects.

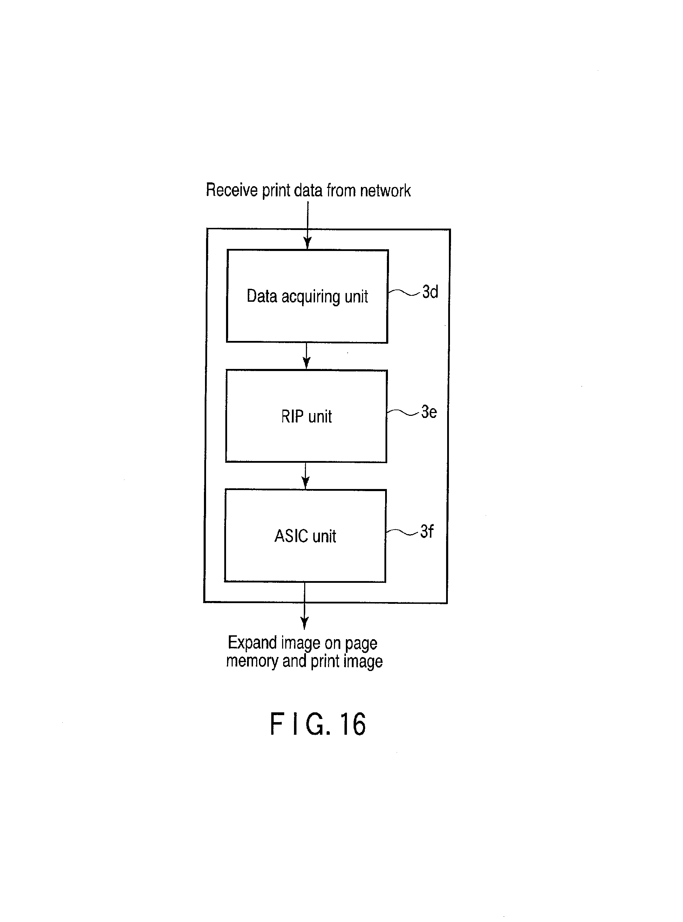

FIG. 16 is an exemplary view showing a diagram of the configuration of a printing apparatus and a flow of processing thereof according to an embodiment. The data acquiring unit 3d acquires print data transmitted from the PC 2. The RIP unit 3e converts the transmitted print data into image data of three planes (CMY) or image data of four planes (CMYK) in a bitmap format. The ASIC unit 3f subjects the image data of the three or four planes to color conversion on the basis of color setting information and generates image data (CMYK). A generated image is expanded on a page memory and printed.

In the embodiment, the print data is transmitted from the print status setting apparatus 10 to the printing apparatus 3 via a communication line.

However, the embodiment is not limited to this form. The print status setting apparatus 10 may output the print data to a storage medium and input the print data to the printing apparatus 3 via the storage medium.

The print status setting apparatus and the print status setting system according to the embodiment explained above realize remarkable effects compared with the related art.

In the print setting in the past, a color cannot be set for each of pages. In this embodiment, the user can perform color designation for color, monochrome, two colors, and the like for each of the pages by causing the preview display unit to display the preview screen.

The preview screen is configured to be capable of displaying print statuses of plural pages on one screen. Therefore, the user can efficiently perform color designation operation for each of the pages.

Further, on the preview screen, the pages can be enlarged and displayed and color designation can be performed for each of objects. Therefore, the user can easily perform various kinds of color designation, for example, partially display the object in color.

In this embodiment, the color conversion processing for display on the preview screen is carried out in a system for using the conversion table. As a result, efficiency of the color conversion processing can be realized.

The print status setting apparatus according to this embodiment can also be applied when the XPS printer driver and the PS/PCL printer driver are used. Therefore, the print status setting apparatus can be extensively used.

In addition to the above effects, in this embodiment, printing with a reduced number of color original documents can be performed. As a result, it is possible to promote saving of printing cost.

The functions explained in the embodiment may be configured by using hardware. The functions may be realized by causing, using software, a computer to read a computer program describing the functions. The functions may be configured by selecting the software or the hardware as appropriate.

Further, the functions can also be realized by causing the computer to read a computer program stored in a not-shown storage medium. A recording form of the storage medium in this embodiment may be any form as long as the storage medium can record the computer program and is computer-readable.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A print status setting apparatus **characterized by** comprising:
a print-setting-screen display unit configured to display a print setting screen for acquiring a print status of a document;
a print-instruction acquiring unit configured to acquire a print status set value via the print setting screen;
a first print-information generating unit configured to generate, from the print status set value, first print information represented by a language used by a printing apparatus for print processing for the document;
a preview display unit configured to display, on the basis of the first print information, a preview screen to change a print status for each of pages of the document;
a print-change-instruction acquiring unit configured to acquire a print status change set value to change the print status for each of the pages via the preview screen;
a second print-information generating unit configured to generate second print information obtained by changing the first print information with the print status change set value applied thereto; and
an information output unit configured to output the second print information.

2. The apparatus according to claim 1, **characterized in that**
the preview screen includes:
a status display area that displays an image representing a print status of at least one page of the document; and
a setting area that displays a module to set a display form of the image displayed in the status display area.

3. The apparatus according to claim 2, **characterized by** further comprising:
an image specifying unit configured to specify a singularity of the image displayed in the status display area; and
a changing-module generating unit configured to generate, on the preview screen, a module to change a print status of the specified image.

4. The apparatus according to claim 3, **characterized in that** the image displayed in the status display area and representing the print status of the page is an image of a predetermined figure, which is displayed in a form corresponding to at least a singularity of the print status.

5. The apparatus according to claim 3, **characterized in that** the image displayed in the status display area and representing the print status of the page is an image obtained by reducing an image of the page.

6. The apparatus according to claim 5, **characterized in that**
in color setting among items representing the print status, statuses of "full-color", "monochrome", and "two colors" can be set, and
when the color setting of the specified image is changed, a color of the image displayed in the status display area is a color converted by using a conversion table.

7. The apparatus according to claim 2, **characterized by** further comprising:
an image specifying unit configured to specify a singularity of the image displayed in the status display area;
an enlarging and displaying unit configured to enlarge and display an image of the page corresponding to the specified image;
an object specifying unit configured to specify one object included in the enlarged image; and
an object-changing-module generating unit configured to generate, on the preview screen, a changing module to change a print status concerning the specified object.

8. The apparatus according to claim 1, **characterized in that**
the apparatus is configured by using an XPS printer driver or a PS/PCL printer driver, and
the second print-information generating unit changes a print ticket or a PJL.

9. The apparatus according to claim 7, **characterized in that**
the apparatus is configured by using an XPS printer driver or a PS/PCL printer driver, and
the second print-information generating unit changes a print status for each of objects by changing data of the specified object.

10. A print status setting method for a print status setting apparatus, **characterized by** comprising:
displaying a print setting screen for acquiring a print status of a document;
acquiring a print status set value via the print setting screen;
generating, from the print status set value, first print information represented by a language used by a printing apparatus for print processing for the document;
displaying, on the basis of the first print information, a preview screen to change a print status for each of pages of the document;
acquiring a print status change set value to change the print status for each of the pages via the preview screen;
generating second print information obtained by changing the first print information with the print status change set value applied thereto; and
outputting the second print information.

11. The method according to claim 10, **characterized in that**
the preview screen includes:
a status display area that displays an image representing a print status of at least one page of the document; and
a setting area that displays a module to set a display form of the image displayed in the status display area.

12. The method according to claim 11, **characterized by** further comprising:
specifying a singularity of the image displayed in the status display area; and
generating, on the preview screen, a module to change a print status of the specified image.

13. The method according to claim 12, **characterized in that** the image displayed in the status display area and representing the print status of the page is an image of a predetermined figure, which is displayed in a form corresponding to at least a singularity of the print status.

14. The method according to claim 12, **characterized in that** the image displayed in the status display area and representing the print status of the page is an image obtained by reducing an image of the page.

15. The method according to claim 14, **characterized in that**
in color setting among items representing the print status, statuses of "full-color", "monochrome", and "two colors" can be set, and
when the color setting of the specified image is changed, a color of the image displayed in the status display area is a color converted by using a conversion table.

16. The method according to claim 11, **characterized by** further comprising:
specifying a singularity of the image displayed in the status display area;
enlarging and displaying an image of the page corresponding to the specified image;
specifying one object included in the enlarged image; and
generating, on the preview screen, a changing module to change a print status concerning the specified object.

17. The method according to claim 10, **characterized in that**
the print status setting apparatus is configured by using an XPS printer driver or a PS/PCL printer driver, and
in the generation of the second print information, a print ticket or a PJL is changed.

18. The method according to claim 16, **characterized in that**
the print status setting apparatus is configured by using an XPS printer driver or a PS/PCL printer driver, and
in the generation of the second print information, a print status is changed for each of objects by changing data of the specified object.

19. A print status setting system **characterized by** comprising:
a printing apparatus configured to print a document; and
a print status setting apparatus configured to supply print data to the printing apparatus, wherein
the print status setting apparatus includes:
a print-setting-screen display unit configured to display a print setting screen for acquiring a print status of a document;
a print-instruction acquiring unit configured to acquire a print status set value via the print setting screen;
a first print-information generating unit configured to generate, from the print status set value, first print information represented by a language used by a printing apparatus for print processing for the document;
a preview display unit configured to display, on the basis of the first print information, a preview screen to change a print status for each of pages of the document;
a print-change-instruction acquiring unit configured to acquire a print status change set value to change the print status for each of the pages via the preview screen;
a second print-information generating unit configured to generate second print information obtained by changing the first print information with the print status change set value applied thereto; and
an information output unit configured to output the second print information, and
the printing apparatus includes:
a print-information acquiring unit configured to acquire the second print information output by the print status setting apparatus;
an RIP unit configured to convert the second print information into image data of three planes or four planes; and
an ASIC unit configured to perform color conversion for the image data.

20. A non-transitory computer-readable medium encoded with computer-readable instructions for causing the computer to execute:
displaying a print setting screen for acquiring a print status of a document;
acquiring a print status set value via the print setting screen;
generating, from the print status set value, first print information represented by a language used by a printing apparatus for print processing for the document;
displaying, on the basis of the first print information, a preview screen to change a print status for each of pages of the document;
acquiring a print status change set value to change the print status for each of the pages via the preview screen;
generating second print information obtained by changing the first print information with the print status change set value applied thereto; and
outputting the second print information.

21. The medium according to claim 20, **characterized in that**
the preview screen includes:
a status display area that displays an image representing a print status of at least one page of the document; and
a setting area that displays a module to set a display form of the image displayed in the status display area.

22. The medium according to claim 21, further causing the computer to execute:
specifying a singularity of the image displayed in the status display area; and
generating, on the preview screen, a module to change a print status of the specified image.

23. The medium according to claim 22, **characterized in that** the image displayed in the status display area and representing the print status of the page is an image of a predetermined figure, which is displayed in a form corresponding to at least a singularity of the print status.

24. The medium according to claim 22, **characterized in that** the image displayed in the status display area and representing the print status of the page is an image obtained by reducing an image of the page.

25. The medium according to claim 24, **characterized in that**
in color setting among items representing the print status, statuses of "full-color", "monochrome", and "two colors" can be set, and
when the color setting of the specified image is changed, a color of the image displayed in the status display area is a color converted by using a conversion table.

26. The medium according to claim 21, further causing the computer to execute:
specifying a singularity of the image displayed in the status display area;
enlarging and displaying an image of the page corresponding to the specified image;
specifying one object included in the enlarged image; and
generating, on the preview screen, a changing module to change a print status concerning the specified object.

27. The medium according to claim 20, **characterized in that**
the computer-readable instructions are generated by using an XPS printer driver or a PS/PCL printer driver, and
in the generation of the second print information, a print ticket or a PJL is changed.

28. The medium according to claim 26, **characterized in that**
the computer-readable instructions are generated by using an XPS printer driver or a PS/PCL printer driver, and
in the generation of the second print information, a print status is changed for each of objects by changing data of the specified object.
